# FASCICULE DE BREVET EUROPEEN

(11) **EP 2 615 952 B1**
(45) Date de publication et mention de la délivrance du brevet: **11.06.2014**
(21) Numéro de dépôt: 11773069.7
(22) Date de dépôt: 13.09.2011
(51) Int. Cl.: A47J 31/60

(54) **DISPOSITIF DE RANGEMENT POUR LIQUIDE DE NETTOYAGE DE MACHINE À CAFÉ**
VORRICHTUNG ZUR FLÜSSIGKEITSSPEICHERUNG ZUR REINIGUNG EINER KAFFEEMASCHINE
DEVICE FOR STORING LIQUID FOR CLEANING A COFFEE MACHINE

(30) Priorité: 17.09.2010 FR 1057467
(43) Date de publication de la demande: 24.07.2013
(73) Titulaire: SEB S.A., 69130 Ecully (FR)
(72) Inventeur: ROUSSEAU, Franck, 72650 La Milesse (FR); VITEL, Arnaud, Alain, 53240 Andouillé (FR); RENARD, Quentin, 53100 Saint-Baudelle (FR)
(74) Mandataire: Novagraaf Technologies
(86) Numéro de dépôt international: PCT/FR2011/052083
(87) Numéro de publication internationale: WO 2012/035247

(56) Documents cités:
- EP-A1- 1 656 863
- DE-A1-102007 040 307
- US-A1- 2009 183 754

## Description

La présente invention concerne le domaine des machines à café possédant un ou plusieurs rangements pour liquide de nettoyage. Plus particulièrement, l'invention se rapporte aux dispositifs de rangement pour réservoir de liquide de nettoyage intégrés à une machine à café autonettoyante. Enfin l'invention se rapporte aux dispositifs de rangement comprenant un dispositif étanche.

Il existe des machines à café proposant des dispositifs de rangement pour liquide de nettoyage, tel que le dispositif décrit dans le brevet CH665945 déposé par CAFAG. Un inconvénient est que ce dispositif ne permet pas de connecter un réservoir de liquide de nettoyage au support de manière à le fixer tout en le rangeant dans le bâti.

La demande de brevet, EP1656863 déposée par NESTEC comprend la description d'une machine à café comportant un dispositif de rangement comprenant un réservoir pour un produit de nettoyage. Cependant ce dispositif n'offre pas un support permettant de faciliter l'accès au réservoir et de l'extraire simplement du bâti de la machine à café.

Par ailleurs, la demande de brevet EP2025268 déposée par GRUPPO CIMBALLI propose également un dispositif de nettoyage pour une machine à café. Cependant, ce dernier ne peut être rangé tout en étant connecté à un support permettant le prélèvement du liquide de nettoyage.

Enfin une autre machine à café, décrite dans la demande US2009183754 déposée par NIRO PLAN AG, comporte un réservoir pour liquide nettoyage. Ce dernier n'est en revanche pas connecté de manière à pouvoir être utilisé dans sa position de rangement.

Un des principaux inconvénients des dispositifs de l'art antérieur, est que la position de rangement n'est pas une position de fonctionnement nominale permettant l'extraction du liquide pour établir un circuit de nettoyage.

L'utilisateur est souvent obligé de retirer le réservoir de liquide de nettoyage de son rangement pour le connecter à un embout de la machine à café de manière à lancer un programme de nettoyage. Une fois le nettoyage effectué, il est nécessaire de replacer le réservoir dans son rangement.

En outre, l'encombrement du réservoir des dispositifs de l'art antérieur ne permet pas de pouvoir connecter ledit réservoir dans une configuration d'utilisation tout en le rangeant simplement, de surcroit en conservant un aspect esthétique agréable de la machine à café.

Le but de l'invention est de proposer un dispositif de rangement qui améliore l'ergonomie de la machine à café et qui présente une conception simple et économique. Dans l'invention, le réservoir est constitué par un simple flacon vendu dans le commerce faisant office de recharge et connectable sur un support mobile par sa partie filetée.

De DE 102007040307 est connu un dispositif de rangement pour machine à café autonettoyante, la machine à café comprenant un bâti, le dispositif de rangement comprenant un support extractible comprenant des moyens de fixation d'un réservoir pour liquide de nettoyage, ledit support comprenant des moyens d'extraction du liquide de nettoyage et étant mobile entre une position de rangement dans laquelle il est visuellement intégré à la machine et une position extraite dans laquelle le réservoir peut être accouplé ou désaccoupler du support.

Un problème demeure concernant la capacité d'une utilisation facile du dispositif, qui simplifie les manoeuvres pour l'utilisateur, notamment lorsqu'il doit intervenir sur le réservoir pour liquide de nettoyage.

Une solution consiste en que le support se présente comme un tiroir coulissant dans le bâti par des moyens de guidage, autorisant une translation, et le bâti comporte des moyens de retenue permettant de limiter la translation du tiroir.

Un avantage est de permettre de ranger dans le bâti d'une machine à café un tel dispositif de nettoyage extractible connecté à un support permettant de le maintenir soit dans une position permettant le nettoyage de la machine soit dans une position permettant de remplacer le réservoir de liquide de nettoyage, sans risque de chute, et ce de façon pratique et fiable.

On peut réduire l'encombrement compris dans la machine. En outre, un démontage et un remontage du réservoir à liquide de nettoyage dans la machine peut être permis aisément et ce réservoir peut être livré séparément ou conjointement à la machine.

Le dispositif de rangement comprend avantageusement :
- un support extractible comprenant des moyens de fixations d'un réservoir pour liquide de nettoyage, le support comprenant une pipette permettant la succion du liquide de nettoyage,
- des moyens de d'extraction solidaires du bâti apte à coopérer avec le support de manière à permettre son extraction tout en le maintenant selon au moins un degré de liberté.

Avantageusement, le support extractible est une potence amovible en translation par rapport au bâti, la translation s'effectuant à partir de moyens de guidage solidaires du bâti.

Avantageusement, le réservoir est un flacon comportant un embout fileté et les moyens de fixations comprennent une partie tubulaire filetée dans laquelle le flacon est vissé.

Avantageusement, les moyens de fixation comprennent un réceptacle tubulaire comprenant un filetage intérieur apte à coopérer avec l'embout fileté du flacon, les moyens de fixations comprenant en outre une collerette annulaire de forme conique destiné à créer un premier contact entre la partie extérieur de la collerette et la partie intérieure de l'embout du flacon lors de son vissage.

Avantageusement, la partie extérieure de la collerette comprend un évasement circulaire de forme torique apte à coopérer avec un bourrelet solidaire de la partie intérieure de l'embout du flacon de manière à établir un second contact.

Avantageusement, les moyens d'extraction du liquide de nettoyage comprennent une pipette permettant la succion du liquide, la pipette étant disposée verticalement sensiblement au centre de la partie tubulaire de manière à être insérée dans le flacon lorsque celui-ci est vissé au support.

Avantageusement, le bâti comprend des moyens de retenue permettant de limiter la translation du support.

Avantageusement, la pipette est métallique.

Avantageusement, la machine à café comprend un bâti comportant un compartiment de rangement destiné à recevoir un dispositif selon l'une quelconque des revendications précédentes.

Avantageusement, la machine à café comprend une porte amovible permettant de masquer le dispositif de rangement lorsqu'elle est fermée.

Avantageusement, la machine à café comprend une chambre de décharge.

Avantageusement, la machine à café comprend un dispositif de dosage permet la récupération d'une dose de liquide prélevée par la pipette.

Avantageusement, la machine à café est une cafetière à filtre ou un percolateur.

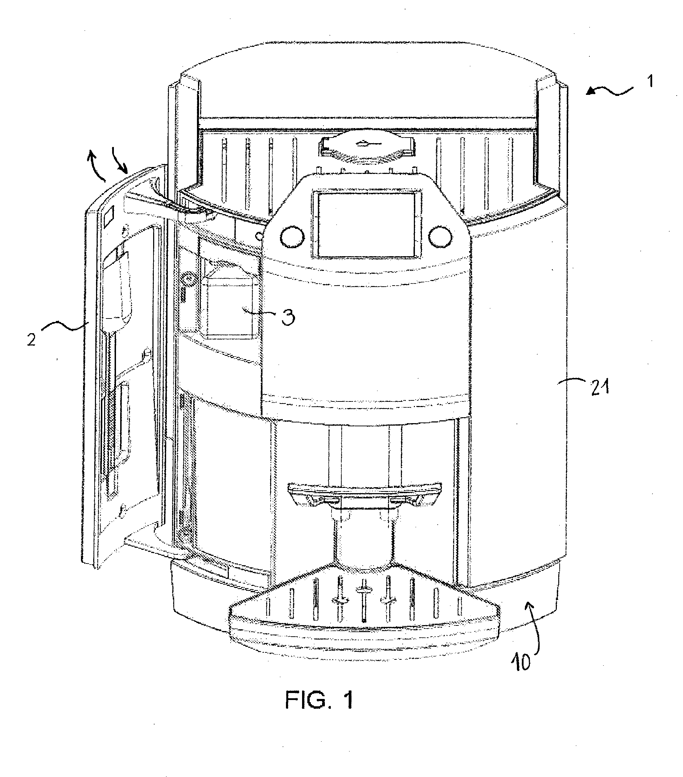

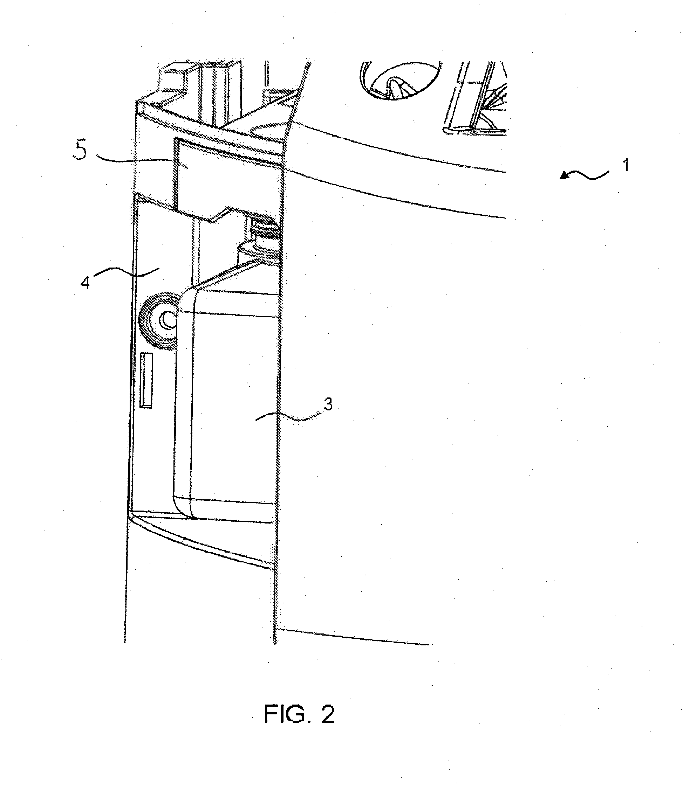

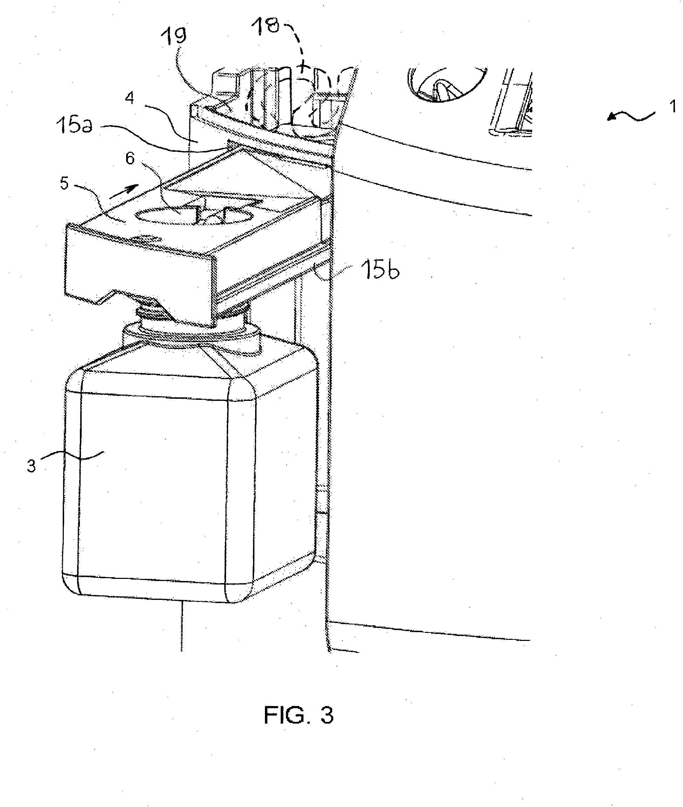

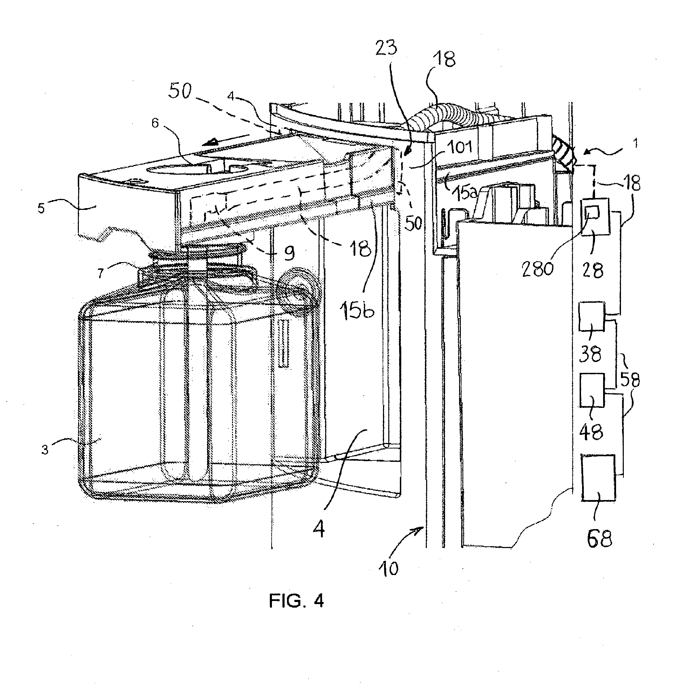

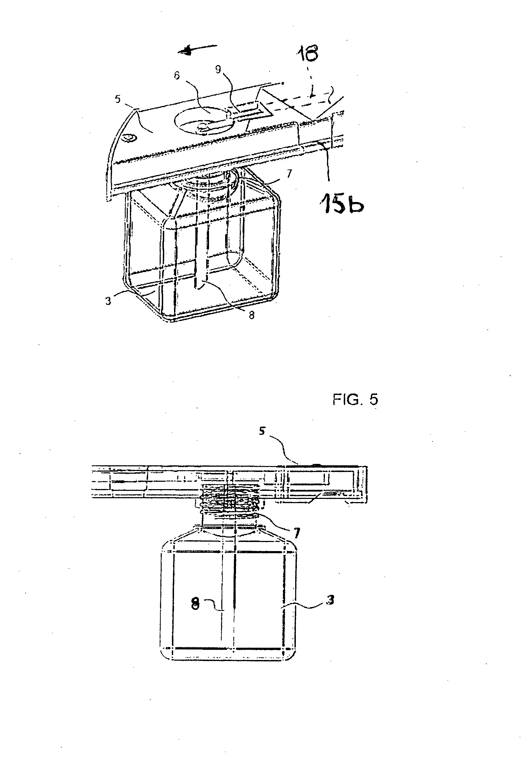

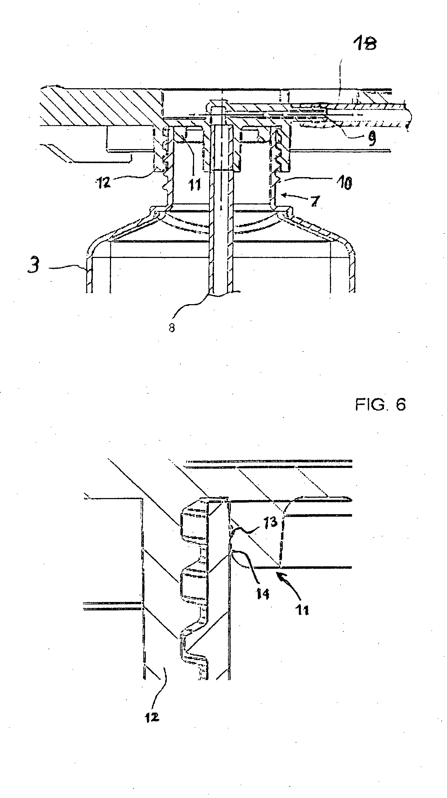

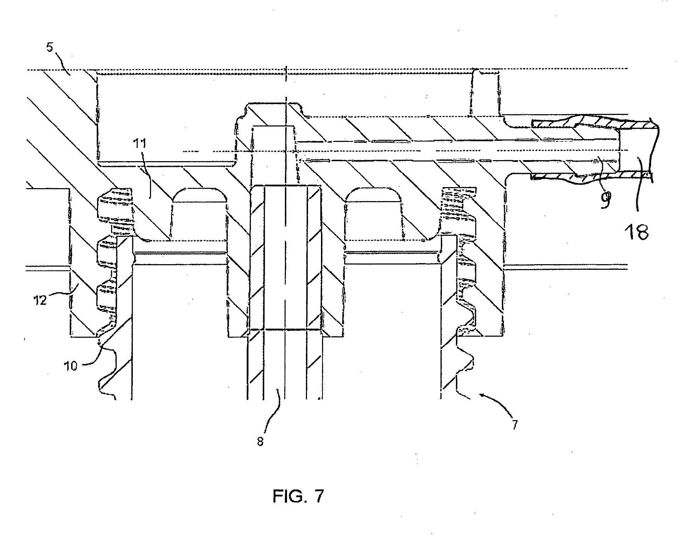

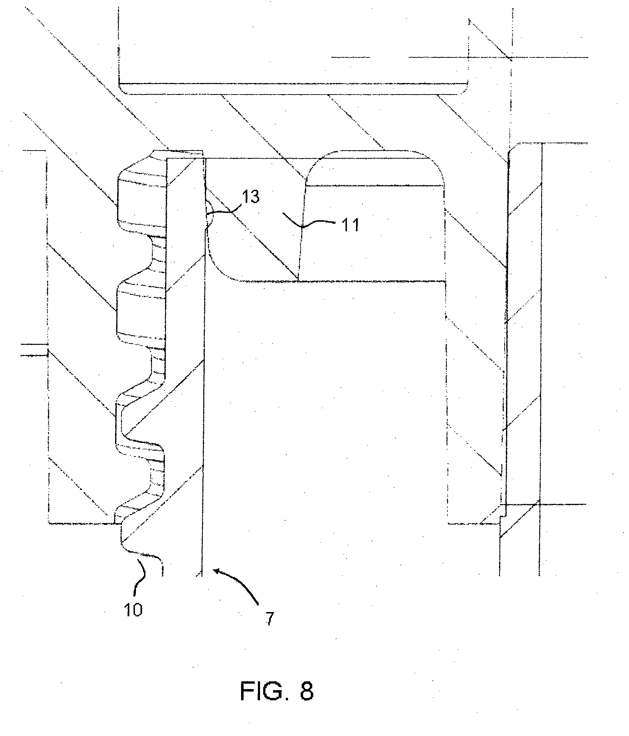

D'autres caractéristiques et avantages de l'invention seront présentés dans une description détaillée et illustrée par les figures suivantes : à l'aide de la description qui suit, faite en regard des dessins annexés qui représentent :
■ figure 1 : la vue générale d'une cafetière comprenant un dispositif de rangement performant;
■ figure 2 : une représentation d'un compartiment de rangement pour un réservoir de liquide de nettoyage ;
■ figure 3 : une première vue en perspective du dispositif de rangement en position ouverte ;
■ figure 4 : une seconde vue du dispositif de rangement en position ouverte ;
■ figure 5 : une troisième vue et une quatrième vue dudit dispositif de rangement, en position ouverte ;
■ figure 6 : un dispositif d'étanchéité dans un mode favorable de réalisation ;
■ figure 7 : une première représentation d'un dispositif d'étanchéité performant ;
■ figure 8 : une seconde représentation du dispositif d'étanchéité.

La figure 1 représente une vue générale d'une machine à café 1 comprenant un bâti 10 pourvu d'une porte latérale 2 permettant d'accéder à un espace de rangement, notamment pour un réservoir de liquide de nettoyage.

En effet, certaines machines à café sont autonettoyantes, c'est-à-dire qu'elles comprennent un dispositif de nettoyage intégré permettant de nettoyer automatiquement le circuit de distribution de la cafetière et/ou un dispositif de moussage de lait dans le cas où la machine comporte un tel dispositif.

Il peut s'agir d'un nettoyage à base d'un détergeant ou d'un détartrage du circuit selon le type de réservoir que l'on utilise.

Un dispositif de rangement selon l'invention pour machine à café comprend une double fonction.

La première fonction est une fonction de rangement. La fonction de rangement permet de ranger le réservoir et de permettre son remplacement lorsque ce dernier est vide ou lorsqu'un utilisateur souhaite changer le réservoir pour une raison particulière. Le dispositif de rangement permet d'extraire simplement le réservoir à partir de moyens permettant par exemple une translation d'un support fixé au réservoir.

La seconde fonction est une fonction de nettoyage. La fonction de nettoyage du dispositif de rangement est de permettre la disposition du réservoir dans une configuration directement utilisable par la machine à café lorsqu'un nettoyage est commandé par un utilisateur.

Ainsi l'espace de rangement permet de conserver le réservoir directement connecté à un dispositif de dosage par le biais de moyen d'extraction du liquide, tel qu'une pipette, permettant le dosage et l'acheminement du liquide de nettoyage dans la machine à café.

Un premier avantage du dispositif de rangement est qu'il peut être intégré dans le bâti d'une machine à café tout en restant discret. La porte latérale permet de conserver une apparence harmonieuse de la machine à café lorsque cette dernière est en position fermée.

Un second avantage de l'invention est que l'espace de rangement du réservoir du liquide de nettoyage correspond à une configuration de fonctionnement nominal. Ainsi, lors du lancement d'un nettoyage de la machine à café, aucune action de connexion ou de vissage ou de configuration particulière du réservoir n'est nécessaire.

La figure 2 représente un compartiment 4 de rangement spécialement adapté à un dispositif de rangement permettant de connecter un réservoir 3 de liquide de nettoyage.

Un troisième avantage du dispositif de l'invention est de permettre un rangement adapté d'un réservoir ayant une forme propre au sein d'un compartiment du bâti de la machine à café. Notamment, un avantage est que la place destinée au rangement est optimisée par rapport à la quantité de liquide embarquée voulue.

La figure 3 représente le dispositif de rangement dans une position extraite du bâti. Le dispositif de rangement comprend un support extractible 5 et des moyens de guidage 15a solidaires du bâti permettant de maintenir au moins un degré de liberté du support tout en autorisant au moins un degré de liberté permettant son extraction.

Le support est mobile entre une position de rangement dans laquelle il est visuellement intégré à la machine et une position extraite dans laquelle le réservoir peut être accouplé ou désaccoupler du support.

On entend par une position de rangement dans laquelle le support est visuellement intégré, une position dans laquelle le support et le flacon sont intégrés à l'intérieur du bâti de manière à ne présenter aucun point de contact avec la surface virtuellement prolongée du bâti recouvrant l'ouverture de l'espace de rangement. Cette caractéristique permet en outre de positionner une porte amovible permettant de masquer le dispositif de rangement lorsqu'elle est fermée.

Un mode de réalisation préféré comprend un support extractible 5 ayant la forme d'un tiroir coulissant dans le bâti et maintenu par des moyens de guidage 15a, 15b qui autorisent un mouvement de translation.

Figures 3, 4, les moyens de guidage 15a, 15b comprennent des glissières 15a portées par le bâti 10 et engagées avec des coulisseaux 15b portés par le tiroir 5.

Le bâti 10 comporte en outre des moyens de retenue 23 permettant de limiter la translation du tiroir 5. Une butée de fin de course peut permettre cela. Ainsi, ces moyens de retenue 23 peuvent comprendre, sur le bâti, une paroi transversale 101 (figure 4). Sur le tiroir, deux prolongements latéraux 50 coopèrent avec elle. En position sortie au maximum du tiroir (figure 4), les prolongements latéraux 50 butent en effet contre l'intérieur de la paroi 101. Ainsi, on peut empêcher qu'en fin de course de sortie le tiroir 5 sorte des glissières 15a.

La paroi extérieure 101 sera de préférence située à l'endroit du compartiment de rangement 4, de façon adjacente à la zone où se déplace le tiroir ; voir figure 4. Sur cette figure, la paroi 101 comporte - ici définit en elle-même localement - les moyens de retenue 23 prévus sur le bâti.

Le support, ou tiroir, 5 comprend des moyens de fixation du réservoir non représentés sur la figure 3. Par exemple, suivant un mode de réalisation préféré, il comprend une ouverture filetée dans le support permettant le vissage d'un embout fileté du réservoir 3 tel qu'un flacon. La connexion est alors réalisée par vissage.

La figure 3 représente la partie supérieure d'une telle ouverture 6, le vissage étant effectué sur la partie inférieure du tiroir 5.

Un quatrième avantage du dispositif de rangement de l'invention est de permettre une extraction simple du tiroir en translation de manière à accéder au réservoir lorsque l'on souhaite le remplacer par exemple.

Des variantes de réalisations permettent, par exemple, de disposer d'une petite poignée ou d'une ouverture sur la face extérieure du tiroir visible en position enfoncée. Cette ouverture ou poignée permet de glisser au moins un doigt de manière à tirer le tiroir vers l'extérieur.

Dans une autre variante de réalisation, un bouton poussoir relié à un mécanisme de ressort permet d'extraire le tiroir par une simple action sur le bouton. Un tel mécanisme existe par exemple sur des lecteurs de disques de PC portables.

Un avantage du dispositif de rangement est de maintenir le réservoir en position fixe dans la machine à café, notamment grâce aux moyens de fixation. Typiquement, lors d'un transport de la machine à café ou lors d'un accident ayant pour conséquence de renverser la machine à café, le dispositif de l'invention permet de maintenir le réservoir en position « prêt à l'emploi » sans avoir déversé de liquide de nettoyage dans le compartiment.

La figure 4 représente une autre vue d'un dispositif de rangement de l'invention comprenant un support 5 en position ouverte. Un flacon 3 est vissé sur une ouverture filetée formant des moyens de fixation intégré au support 5.

Un embout 7 du flacon 3 permet de coopérer avec l'ouverture filetée du support 5.

Un avantage de l'invention est de permettre de dégager une zone de manipulation dans laquelle la connexion entre le réservoir et le support est facilitée par les mouvements de vissage. Notamment, le support 5 permet d'extraire suffisamment le réservoir de manière à permettre des mouvements de la main sans être gêné par le bâti de la machine à café.

En outre, un avantage du dispositif de l'invention est de permettre une accessibilité immédiate du réservoir par l'utilisateur.

La figure 5 représente deux vues dont une première vue 3D et une vue 2D du dispositif de l'invention.

Le support 5 comprend avantageusement des moyens d'extraction du liquide de nettoyage. Dans un mode de réalisation préféré de l'invention, les moyens d'extraction du liquide de nettoyage comprennent une pipette 8.

Un mode de réalisation de l'invention permet de munir le support 5 :
- d'un bras permettant l'acheminement du liquide vers l'intérieur de la machine à café destiné à nettoyer le circuit de distribution ;
- d'un coude 9 permettant de plonger la pipette dans le réservoir tout en la maintenant verticalement.

La pipette 8 est insérée dans le flacon jusqu'au fond de ce dernier de manière à prélever le maximum de liquide tout au long de son utilisation.

Dans un mode de réalisation la pipette est métallique.

On conseille que les moyens d'extraction du liquide de nettoyage comprennent :
- une pipette 8 plongeant dans le réservoir 3,
- une pompe à liquide 28, et
- un tuyau 18 fixé de façon permanente à la pipette 8 et à la pompe et s'étendant entre elles, pour apporter le liquide de nettoyage vers un bac de nettoyage 38.

Le tuyau 18 sera favorablement flexible (donc déployable/repliable sans risque) et d'une longueur adaptée pour pouvoir, en se déployant, suivre une sortie du tiroir 5 vers l'extérieur du bâti (figures 4, 5, avec les flèches) et, en se repliant dans un espace intérieur 19 de ce bâti, une rentée de ce tiroir vers l'intérieur du bâti (figure 3, avec la flèche; le tuyau 18 est en traits fantômes, replié dans l'espace 19).

Figure 4, le repère 18 le plus à droite (traits tiretés) symbolise la partie du tuyau qui se connecte à la pompe 28. Au-delà, le tuyau 18 se poursuit vers le bac de nettoyage 38. A ce bac est par ailleurs connecté le tuyau 58 qui amène vers lui, via la pompe 48, de l'eau stockée dans le réservoir 68.

Le tuyau 18, les pompes 28, 48 (qui pourraient n'en faire qu'une), le bac de nettoyage 38, le tuyau 58 et réservoir d'eau 68 appartiennent à la machine et sont disposés dans le bâti 10. Le réservoir d'eau 68, accessible, voire amovible vis-à-vis du bâti, pour être remplissable une fois vide, peut être disposé derrière une porte latérale pivotante 21 ; voir figure 1.

Le dispositif d'extraction du liquide de nettoyage peut être avantageusement relié à un dispositif de dosage permettant de prélever la quantité souhaité de liquide pour établir un circuit de nettoyage adapté au nettoyage de la machine à café. Figure 4, un dispositif de dosage 280 communique ainsi avec la pompe 28 et le tuyau 18 pour la récupération d'une dose de liquide prélevée par la pipette 8.

Avantageusement, l'ouverture 6 permet d'accéder au mécanisme de prélèvement, y compris la pipette, le coude ou le bras, de manière à changer tout ou une partie du mécanisme en cas de défaillance ou d'usure.

Le dispositif de rangement de l'invention comprend avantageusement dans un mode préféré un dispositif d'étanchéité du réservoir.

La figure 6 représente deux vues permettant de montrer le mécanisme d'étanchéité du dispositif de rangement.

Le dispositif d'étanchéité est avantageusement compris dans les moyens de fixations du support de manière à garantir une étanchéité maximale. Les moyens de fixations comprennent un réceptacle tubulaire 12 comprenant un filetage intérieur apte à coopérer avec l'embout fileté 7 du flacon 3.

Le filetage 10 permet d'assurer un premier contact entre l'embout du flacon et le réceptacle tubulaire fileté 12 du support, le contact assurant l'étanchéité du dispositif de l'invention.

Dans un mode de réalisation permettant une meilleure étanchéité, les moyens de fixations comprenant en outre une collerette annulaire 11 de forme sensiblement conique destinée à créer un second contact entre la partie extérieure de la collerette et la partie intérieure de l'embout du flacon lors de son vissage.

Cette solution présente les avantages, une fois le flacon vissé de :
- bloquer le liquide de nettoyage provenant de l'intérieur du flacon pouvant s'écouler de la face intérieure de l'embout du flacon vers sa face extérieure et ;
- d'éviter que la partie du liquide, s'étant quand même écoulé, puisse dégouliner le long de la face extérieure de l'embout du flacon.

Un des avantages de l'utilisation d'une collerette est de permettre une étanchéité même lorsque le flacon est partiellement vissé, c'est-à-dire lorsqu'il n'a pas atteint sa position de butée mais que l'embout du flacon a dépassé l'embout de la collerette.

Un des avantages conséquent à cette étanchéité est de permettre une marge de positionnement angulaire du flacon lors du vissage de manière à adapter par exemple un flacon de section rectangulaire dans un espace adapté à recevoir un flacon à la forme du flacon.

Etant donné que le flacon doit coopérer avec l'espace de rangement, l'invention permet de garantir une étanchéité du flacon pour différents degrés de serrage correspondant à différents positionnements en rotation du flacon. Une position est notamment préférée pour insérer le flacon au mieux dans l'espace de rangement.

De manière à réaliser une collerette annulaire 11 de forme sensiblement conique, un mode de réalisation permet de fabriquer une collerette 11 ayant une face extérieure sensiblement inclinée de manière à favoriser le contact entre l'embout du flacon et la collerette.

Enfin un mode de réalisation amélioré permet de munir la collerette conique 11 d'un évasement circulaire 13 de forme torique permettant de coopérer avec un bourrelet circulaire et solidaire de la partie intérieure de l'embout 7 du flacon 3.

Un avantage de cette solution est de créer une troisième zone de contact entre le réceptacle tubulaire des moyens de fixations du support et l'embout du flacon. L'étanchéité du dispositif de rangement est améliorée.

Un autre avantage du bourrelet circulaire est de permettre de délivrer un indicateur de fin de course lors du vissage. En effet, lors du vissage du flacon, l'augmentation de l'effort lors du vissage est à son maximum juste avant que le bourrelet ne soit en contact avec l'évasement 13. L'utilisateur ressent la mise en contact lors du vissage et peut alors arrêter son action.

Enfin, un autre avantage est que le maintien du flacon par les moyens de fixations est augmenté. Cet avantage résulte de la coopération adaptée du bourrelet et de l'évasement 13 de la collerette.

Ce dernier mode de réalisation permet donc d'améliorer :
- l'étanchéité du dispositif de rangement et ;
- le maintien du flacon en position vissée.

Enfin ce mode de réalisation permet de donner une indication de fin de course à l'utilisateur permettant ainsi de ne peut pas détériorer le mécanisme au fil des remplacements par une pression trop forte en fin de vissage.

Ce dispositif permet également d'éviter une configuration où le flacon ne serait pas suffisamment vissé entraînant un risque de fuite, l'utilisateur attendant l'indicateur de fin de course pendant sa manipulation.
La figure 7 représente une configuration dans laquelle le réservoir 3 n'est pas complètement vissé dans le réceptacle tubulaire 12.
La figure 8 représente une configuration dans laquelle l'embout du réservoir est vissé au maximum dans le réceptacle tubulaire 12.

L'invention se rapporte également à une machine à café qui comprend un compartiment de rangement destiné à recevoir un dispositif de rangement décrit précédemment. Dans un mode de réalisation, la machine à café comprend une porte amovible permettant de masquer le dispositif de rangement lorsqu'elle est fermée.

Dans un mode de réalisation, la machine à café comprend une chambre de décharge, ici le bac de nettoyage 38.

Dans un mode de réalisation, la machine à café comprend un dispositif de dosage permettant la récupération d'une dose de liquide prélevée par la pipette adaptée à effectuer le circuit de nettoyage.

Enfin, la machine à café comprenant un tel dispositif de rangement peut être une cafetière à filtre ou un percolateur.

## Revendications

1. Dispositif de rangement pour machine à café autonettoyante, la machine à café comprenant un bâti, le dispositif de rangement comprenant un support (5) extractible comprenant des moyens de fixation d'un réservoir (3) pour liquide de nettoyage, ledit support (5) comprenant des moyens (8, 18) d'extraction du liquide de nettoyage et étant mobile entre une position de rangement dans laquelle il est visuellement intégré à la machine et une position extraite dans laquelle le réservoir (3) peut être accouplé ou désaccouplé du support (5), **caractérisé en ce que** le support (5) se présente comme un tiroir coulissant dans le bâti par des moyens de guidage (15a, 15b), autorisant une translation, et le bâti comporte des moyens de retenue (23) permettant de limiter la translation du tiroir.

2. Dispositif selon la revendication 1 **caractérisé en ce que** le réservoir (3) est un flacon (3) comportant un embout fileté (7) et les moyens de fixation comprennent une partie tubulaire filetée dans laquelle le flacon (3) peut être vissé et dévissé.

3. Dispositif selon la revendication 1, **caractérisé en ce que** les moyens de fixation comprennent un réceptacle tubulaire (12) comprenant un filetage intérieur apte à coopérer avec un embout fileté (7) du flacon (3), les moyens de fixation comprenant en outre une collerette (11) annulaire de forme conique créant un premier contact entre une partie extérieure de la collerette (11) et une partie intérieure de l'embout (7) du flacon (3) lors d'un vissage de celui-ci.

4. Dispositif selon la revendication 3, **caractérisé en ce que** la partie extérieure de la collerette (11) comprend un évasement (13) circulaire de forme torique apte à coopérer avec un bourrelet solidaire de la partie intérieure de l'embout (7) de manière à établir un second contact.

5. Dispositif selon la revendication 2, **caractérisé en ce que** les moyens d'extraction du liquide de nettoyage comprennent une pipette (8) permettant une succion du liquide, la pipette (8) étant disposée verticalement sensiblement au centre de la partie tubulaire de manière à être insérée dans le flacon (3) lorsque celui-ci est vissé au support (5).

6. Dispositif selon l'une des revendications 1 à 5, **caractérisé en ce que** les moyens d'extraction du liquide de nettoyage comprennent :
- une pipette (8) plongeant dans le réservoir (3),
- une pompe à liquide (28), et
- un tuyau (18) fixé de façon permanente à la pipette (8) et à la pompe et s'étendant entre elles, pour apporter le liquide de nettoyage vers un bac de nettoyage (38), le tuyau (18) étant flexible et d'une longueur adaptée pour pouvoir, en se déployant, suivre une sortie du tiroir vers l'extérieur du bâti et, en se repliant dans un espace intérieur (19) de ce bâti, un rentée de ce tiroir vers l'intérieur du bâti.

7. Machine à café **caractérisée en ce qu'**elle comprend un bâti comportant un compartiment de rangement (4) recevant le dispositif de rangement selon l'une des revendications précédentes, une paroi extérieure (101) du compartiment de rangement comportant les moyens de retenue (15a) étant prévus sur le bâti.

8. Machine à café selon la revendication 7, **caractérisée en ce qu'**elle comprend une porte (2) amovible permettant de masquer le dispositif de rangement lorsque la porte est fermée.

9. Machine à café selon l'une des revendications 7, 8, caractérisée en qu'elle comprend un dispositif de dosage (280) permettant la récupération d'une dose de liquide prélevée par la pipette (8).

10. Machine à café selon l'une des revendications 7 à 9, **caractérisée en ce qu'**elle est une cafetière à filtre ou un percolateur.

## Patentansprüche

1. Speichervorrichtung für eine selbstreinigende Kaffeemaschine, wobei die Kaffeemaschine ein Gestell umfasst, wobei die Speichervorrichtung eine herausnehmbare Stütze (5) umfasst, die Mittel zur Befestigung eines Reservoirs (3) für Reinigungsflüssigkeit umfasst, wobei die Stütze (5) Mittel (8, 18) zur Entnahme der Reinigungsflüssigkeit umfasst und zwischen einer Speicherposition, in der sie visuell in die Maschine integriert ist, und einer herausgezogenen Position, in der das Reservoir (3) an die Stütze (5) angekoppelt oder von ihr abgekoppelt werden kann, beweglich ist, **dadurch gekennzeichnet, dass** sich die Stütze (5) als eine Schublade präsentiert, die über eine Translation gestattende Führungsmittel (15a, 15b) im Gestell gleitet, und das Gestell Haltemittel (23) umfasst, dank derer die Translation der Schublade begrenzt werden kann.

2. Vorrichtung nach Anspruch 1, **dadurch gekennzeichnet, dass** das Reservoir (3) eine Flasche (3) ist, die ein Gewindeendstück (7) umfasst, und die Befestigungsmittel ein rohrförmiges Gewindeteil umfassen, in das und aus dem die Flasche (3) ein- bzw. ausgeschraubt werden kann.

3. Vorrichtung nach Anspruch 1, **dadurch gekennzeichnet, dass** die Befestigungsmittel ein rohrförmiges Behältnis (12) umfassen, das ein Innengewinde umfasst, das geeignet ist, mit einem Gewindeendstück (7) der Flasche (3) zusammenzuwirken, wobei die Befestigungsmittel ferner einen ringförmigen Sattel (11) mit konischer Form umfassen, der einen ersten Kontakt zwischen einem äußeren Teil des Sattels (11) und einem inneren Teil des Endstücks (7) der Flasche (3) schafft, wenn diese geschraubt wird.

4. Vorrichtung nach Anspruch 3, **dadurch gekennzeichnet, dass** der äußere Teil des Sattels (11) eine kreisförmige Ausweitung (13) mit torischer Form umfasst, die geeignet ist, mit einem fest mit dem inneren Teil des Endstücks (7) verbundenen Wulst zusammenzuwirken, um einen zweiten Kontakt herzustellen.

5. Vorrichtung nach Anspruch 2, **dadurch gekennzeichnet, dass** die Mittel zur Entnahme der Reinigungsflüssigkeit einen Saugheber (8) umfassen, der ein Ansaugen der Flüssigkeit gestattet und vertikal, im Wesentlichen in der Mitte des rohrförmigen Teils angeordnet ist, so dass er in die Flasche (3) eingeführt wird, wenn diese an die Stütze (5) geschraubt wird.

6. Vorrichtung nach einem der Ansprüche 1 bis 5, **dadurch gekennzeichnet, dass** die Mittel zur Entnahme der Reinigungsflüssigkeit Folgendes umfassen:
- einen Saugheber (8), der in das Reservoir (3) eintaucht,
- eine Flüssigkeitspumpe (28) und
- einen Schlauch (18), der permanent an dem Saugheber (8) und an der Pumpe befestigt ist und sich zwischen diesen erstreckt, um die Reinigungsflüssigkeit zu einem Reinigungsbehälter (38) zu transportieren, wobei der Schlauch (18) flexibel und so lang ist, dass er durch Ausfahren einem Herausziehen der Schublade zum Äußeren des Gestells hin und durch Zusammenlegen in einem inneren Raum (19) dieses Gestells einem Hineinschieben dieser Schublade in das Innere des Gestells folgen kann.

7. Kaffeemaschine, **dadurch gekennzeichnet, dass** sie ein Gestell umfasst, das ein Speicherfach (4) umfasst, das die Speichervorrichtung nach einem der vorhergehenden Ansprüche aufnimmt, wobei eine Außenwand (101) des Speicherfachs die am Gestell vorgesehenen Haltemittel (15a) umfasst.

8. Kaffeemaschine nach Anspruch 7, **dadurch gekennzeichnet, dass** sie eine entfernbare Tür (2) umfasst, dank derer die Speichervorrichtung verdeckt werden kann, wenn die Tür geschlossen ist.

9. Kaffeemaschine nach Anspruch 7 oder 8, **dadurch gekennzeichnet, dass** sie eine Dosiervorrichtung (280) umfasst, dank derer die Wiedergewinnung einer von dem Saugheber (8) entnommenen Flüssigkeitsdosis gestattet ist.

10. Kaffeemaschine nach einem der Ansprüche 7 bis 9, **dadurch gekennzeichnet, dass** sie eine Filterkaffeemaschine oder ein Perkolator ist.

## Claims

1. Storage device for a self-cleaning coffee machine, the coffee machine comprising a frame, the storage device comprising an extractable support (5) comprising means for fastening a reservoir (3) for cleaning liquid, the said support (5) comprising means (8, 18) for extracting the cleaning liquid and being movable between a storage position in which it is visually integrated in the machine and an extracted position in which the reservoir (3) can be coupled to or uncoupled from the support (5), **characterized in that** the support (5) takes the form of a drawer which slides in the frame by way of guide means (15a, 15b), allowing a translational movement, and the frame comprises retaining means (23) making it possible to limit the translational movement of the drawer.

2. Device according to Claim 1, **characterized in that** the reservoir (3) is a flask (3) comprising a threaded end-piece (7) and the fastening means comprise a threaded tubular part in which the flask (3) can be screwed and unscrewed.

3. Device according to Claim 1, **characterized in that** the fastening means comprise a tubular receptacle (12) comprising an internal thread able to cooperate with a threaded end-piece (7) of the flask (3), the fastening means additionally comprising an annular collar (11) of conical shape creating a first contact between an outer part of the collar (11) and an inner part of the end-piece (7) of the flask (3) when the latter is screwed.

4. Device according to Claim 3, **characterized in that** the outer part of the collar (11) comprises a circular widening (13) of toric shape able to cooperate with a bead secured to the inner part of the end-piece (7) so as to establish a second contact.

5. Device according to Claim 2, **characterized in that** the means for extracting the cleaning liquid comprise a pipette (8) allowing a suction of the liquid, the pipette (8) being arranged vertically substantially at the centre of the tubular part so as to be inserted into the flask (3) when the latter is screwed to the support (5).

6. Device according to one of Claims 1 to 5, **characterized in that** the means for extracting the cleaning liquid comprise:
- a pipette (8) dipping into the reservoir (3),
- a liquid pump (28), and
- a hose (18) fixed permanently to the pipette (8) and to the pump and extending between them, in order to supply the cleaning liquid to a cleaning tank (38), the hose (18) being flexible and having a length adapted in order to be able, as it unfolds, to follow an outward movement of the drawer towards the outside of the frame and, as it folds back into an inner space (19) of this frame, to follow a return movement of this drawer towards the inside of the frame.

7. Coffee machine, **characterized in that** it comprises a frame comprising a storage compartment (4) receiving the storage device according to one of the preceding claims, an outer wall (101) of the storage compartment comprising the retaining means (15a) being provided on the frame.

8. Coffee machine according to Claim 7, **characterized in that** it comprises a removable door (2) making it possible to conceal the storage device when the door is closed.

9. Coffee machine according to either of Claims 7 and 8, **characterized in that** it comprises a dosing device (280) making it possible to recover a dose of liquid withdrawn by the pipette (8).

10. Coffee machine according to one of Claims 7 to 9, **characterized in that** it is a filtered coffee maker or a percolator.
